# EUROPEAN PATENT APPLICATION

(11) **EP 3 520 976 A1**
(43) Date of publication of application: **07.08.2019**
(21) Application number: 19154565.6
(22) Date of filing: 30.01.2019
(51) Int. Cl.: B27C 3/04, B27M 3/00, B23B 39/16, B27F 5/12

(54) **EQUIPMENT AND METHOD FOR WOOD PROCESSING**

(30) Priority: 02.02.2018 IT 201800002329
(71) Applicant: Sarmax S.r.l., 41019 Soliera (MO), Frazione Limidi (IT)
(72) Inventor: REGGIANI, Andrea, 41019 Soliera (MO), Frazione Limidi (IT)
(74) Representative: Zoli, Filippo

(57) **Abstract**

The equipment (1) for wood processing, comprising: a load-bearing frame (2); a holding plane (3) of at least a first wooden manufactured article (M') to be processed associated with the load-bearing frame (2); a work assembly (5) associated with the load-bearing frame (2), arranged on top of the holding plane (3) and moveable in the approaching/spacing away direction (7) with respect to the holding plane itself, where the work assembly (5) is provided with at least one main tool (6) for drilling the wood which is operable in rotation around a related axis (X) and defining a related work trajectory (Y); wherein the work assembly (5) comprises a plurality of the main tools (6) for drilling the wood substantially arranged at the same height the one to the other with respect to the holding plane (3) and the work trajectories (Y) of which intersect each other so that the corresponding holes (F) defined on the first manufactured article (M') to be processed are at the same level and communicating with each other to define a single recess (S).

## Description

The present invention relates to a piece of equipment for wood processing.

In the furnishing sector, several types of joints are known to firmly connect two sheet-shaped elements arranged orthogonally to each other.

The most commonly used type of joint involves the use of a pin and a peg on the face of a first sheet-shaped element which are adapted to be fitted into corresponding holes formed in the thickness of the second sheet-shaped element, where the pin is blocked by means of an eccentric fitted into a corresponding hole formed on the face of the second sheet-shaped element. This type of joint requires a series of different processes, carried out both on the face and on the thickness of the sheet-shaped elements to be joined.

As can be easily understood, these processes, some of which require the use of different types of tool, involve long manufacturing times and, therefore, high production costs.

To overcome this drawback, a new type of joint has also recently been designed, which involves the creation of a single recess, of variable width, on the face of one of the two sheet-shaped elements to be joined and of a single hole on the face of the other sheet-shaped element. More in detail, inside the recess thus made a corresponding contoured plate is inserted which is provided inside it with a threaded pin adapted to be inserted in the hole obtained on the other sheet-shaped element to carry out the mutual fixing thereof.

As the technician of the field can easily appreciate, this type of joint requires a significantly lower number of processes compared to the aforementioned one and, therefore, it is easier to achieve as well as cheaper.

One drawback of this last type of joint described above consists in the fact that the process required to carry out the recess described above must be carried out, particularly for large production batches, using numerical control machines, since manual processing would be excessively costly both in terms of time and costs, as well as not very precise and reproducible.

This however requires the use of special and technologically advanced equipment, which inevitably has an impact on the cost of the final product.

The main aim of the present invention is to devise a piece of equipment for wood processing that allows carrying out the processes required for the application of the above mentioned joint, and in particular a recess with variable width, in an easy and practical way and at low costs.

A further object of the present invention is to devise a piece of equipment for wood processing that allows overcoming the aforementioned drawbacks of the prior art in a simple, rational, easy, effective to use and low-cost solution.

The above objects are achieved by the present equipment for wood processing according to claim 1.

Other characteristics and advantages of the present invention will be more evident from the description of a preferred, but not exclusive, embodiment of piece of equipment for wood processing, illustrated by way of an indicative, but non-limiting example, in the attached tables of drawings in which:

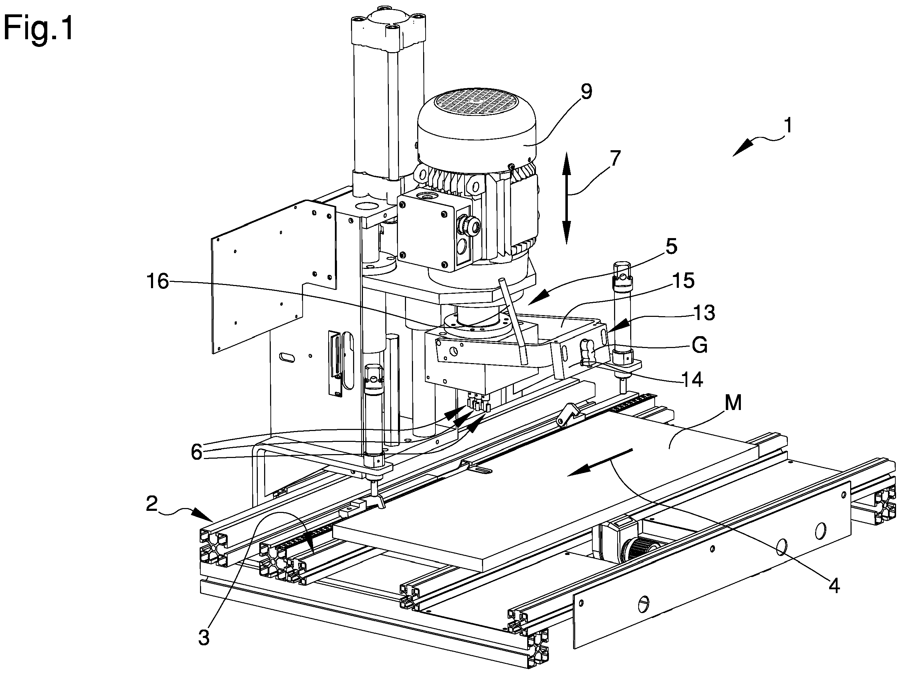

Figure 1 is an axonometric view of a piece of equipment according to the invention, in a first embodiment;
Figure 2 is an enlargement of the work assembly of the equipment of Figure 1;

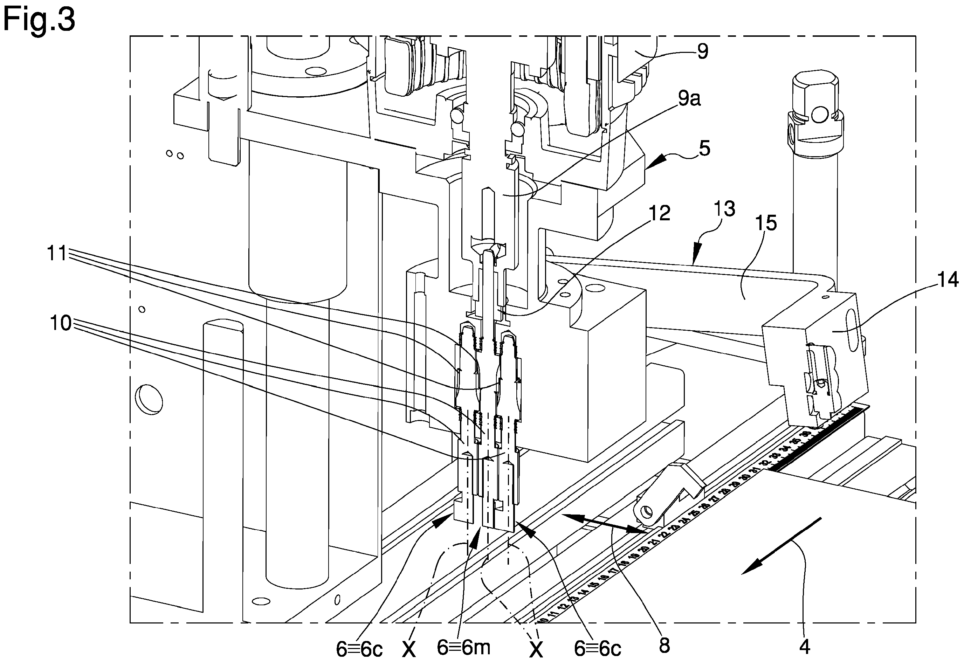

Figure 3 is a cross-sectional view of the work assembly of Figure 2;

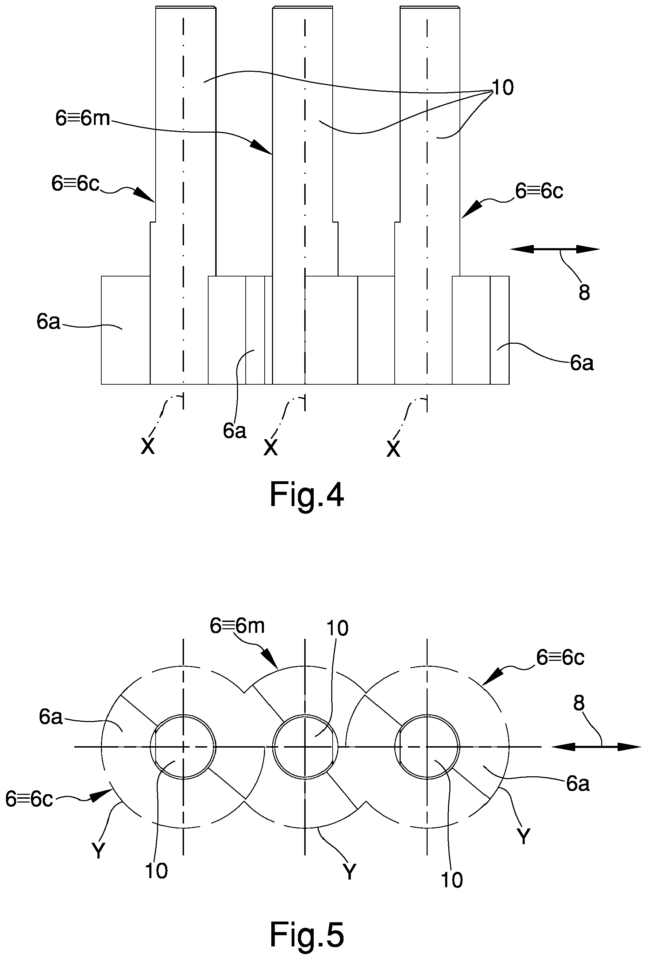

Figure 4 is a side elevation view of the tools of the work assembly of Figure 2;
Figure 5 is a top plan view of the tools of Figure 4;
Figure 6 is an axonometric view of a piece of equipment according to the invention, in a second embodiment;
Figure 7 is an enlargement of the work assembly of the equipment of Figure 6;
Figure 8 is a cross-sectional view of the work assembly of Figure 7;
Figure 9 is a side elevation view of the tools of the work assembly of Figure 7;
Figure 10 is a top plan view of the tools of Figure 9.

With particular reference to these illustrations, reference numeral 1 globally indicates a piece of equipment for wood processing.

The equipment 1 comprises a load-bearing frame 2 and at least a holding plane 3 of at least a first wooden manufactured article M' to be processed which is associated with the frame 2.

In the embodiment shown in the illustrations, the holding plane 3 is of the fixed type, but alternative embodiments cannot however be ruled out wherein the holding plane 3 can be moved in translation along at least one forward direction.

The equipment 1 also comprises a work assembly 5 associated with the frame 2, arranged on top of the holding plane 3 and provided with at least one tool 6 for drilling the wood which is operable in rotation around a related axis X and defining a related work trajectory Y. The work assembly 5 is moveable in the approaching/spacing away direction, identified in the figures with the double arrow 7, from the holding plane 3.

According to the invention, the work assembly 5 comprises a plurality of main tools 6 substantially arranged (i.e. except for the processing tolerances) at the same height the one to the other with respect to the holding plane 3 and arranged in such a way that the related trajectories Y intersect each other, so that the corresponding main holes F defined on the first manufactured article M' to be processed are communicating with each other to obtain a single recess S. The main holes F thus made are therefore defined the one to the other on the same plane.

The recess S is made in such a way as to face one of the perimeter edges B of the first manufactured article M'. In other words, one of the main holes F also intercepts the edge B and the recess S defines an open type profile.

The recess S is therefore accessible from the outside both from the front, i.e. along the drilling axis, and from the side.

Appropriately, each main tool 6 is provided with related cutting teeth 6a, which are angularly offset the one to the other so as not to interfere with each other during their rotation around the related axes X. More in detail, the cutting teeth 6a of the main tools 6 are arranged substantially at the same height the one to the other with respect to the holding plane 3 in order to define a single drilling plane.

The trajectory Y of each main tool 6 therefore corresponds to the trajectory covered by the related cutting teeth 6a during the rotation around the related axis X.

Advantageously, the axes X of the main tools 6 are arranged in line with each other along a direction of work, identified in the figures with the double arrow 8. The direction of work 8 is arranged transversely with respect to the edge B intercepted by one of the main holes F.

In the event of the holding plane 3 being moveable along the forward direction 4, the direction of work 8 is arranged transversely to the forward direction itself. More particularly, the direction of work 8 is substantially orthogonal to the forward direction 4.

Preferably, the work assembly 5 comprises at least three main tools 6, where the trajectory Y of each of them intersects the trajectory Y of the adjacent main tools 6.

Appropriately, the work assembly 5 comprises motor means 9 and the main tools 6 comprise at least one driving tool 6m, kinematically connected to the motor means 9, and at least one driven tool 6c, kinematically connected to the driving tool 6m.

More in detail, each main tool 6 has a related shaft 10 at one end of which the cutting teeth 6a are associated and on which the related gear wheels 11 are keyed meshing with each other. The shaft 10 of the driving tool 6m is mechanically connected to the driving shaft 9a of the motor means 9.

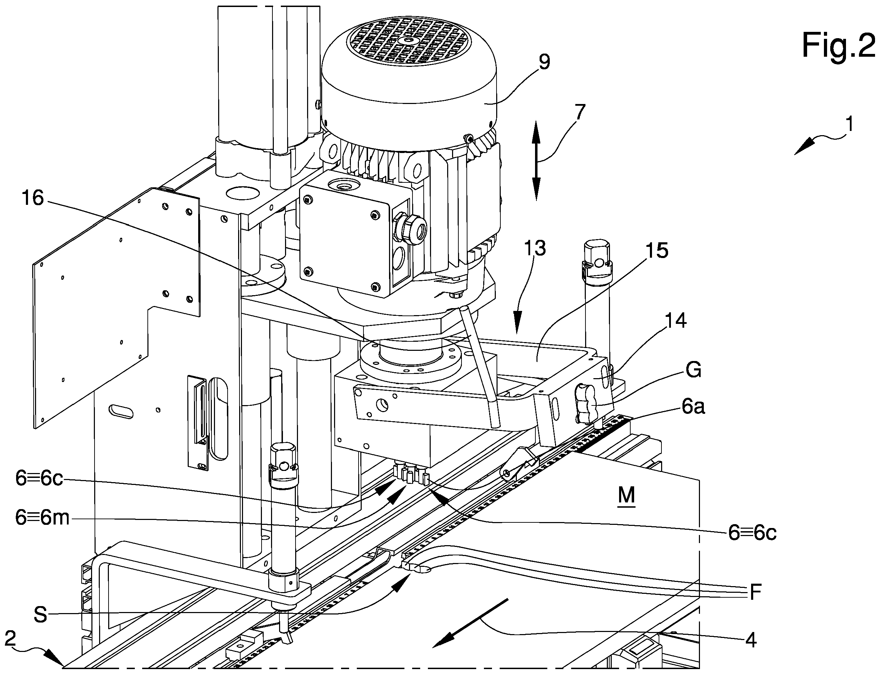

In the embodiment shown in the illustrations, the work assembly 5 comprises three main tools 6, which make three consecutive and communicating main holes F on the first manufactured article M', as shown in Figure 2. Advantageously, out of these three main tools 6 the central tool corresponds to the driving tool 6m and the two lateral tools correspond to the driven tools 6c. The driving tool 6m therefore rotates in the opposite direction to the two driven tools 6c.

Since the distance between the axes X of the three main tools 6 is very small, an adapter element 12 is suitably placed between the shaft 10 of the driving tool 6m and the driving shaft 9a.

Preferably, the equipment 1 comprises application means 13 of at least one joining element G inside the recess S. The joining element G, as can be seen from Figure 2, has a conformation substantially similar to that of the recess S. In detail, the joining element G comprises a body Ga with a profile substantially similar to that of the recess S and a connection element Gb inserted smoothly inside the body Ga.

More particularly, the application means 13 comprise at least one supporting element 14 of the joining element G, where such supporting element 14 is hinged to the work assembly 5 and is moveable between at least one rest position, in which it is spaced away from the holding plane 3, and at least one work position, in which it is approached to the holding plane 3 so as to insert the joining element G inside the recess S.

Appropriately, the supporting element 14 has a seat (not visible in detail in the figures) in which the joining element G is inserted by interlocking.

The supporting element 14 is locked together with a bracket 15 which is in turn hinged to the work assembly 5 and provided with a gripping element 16 which can be gripped by an operator.

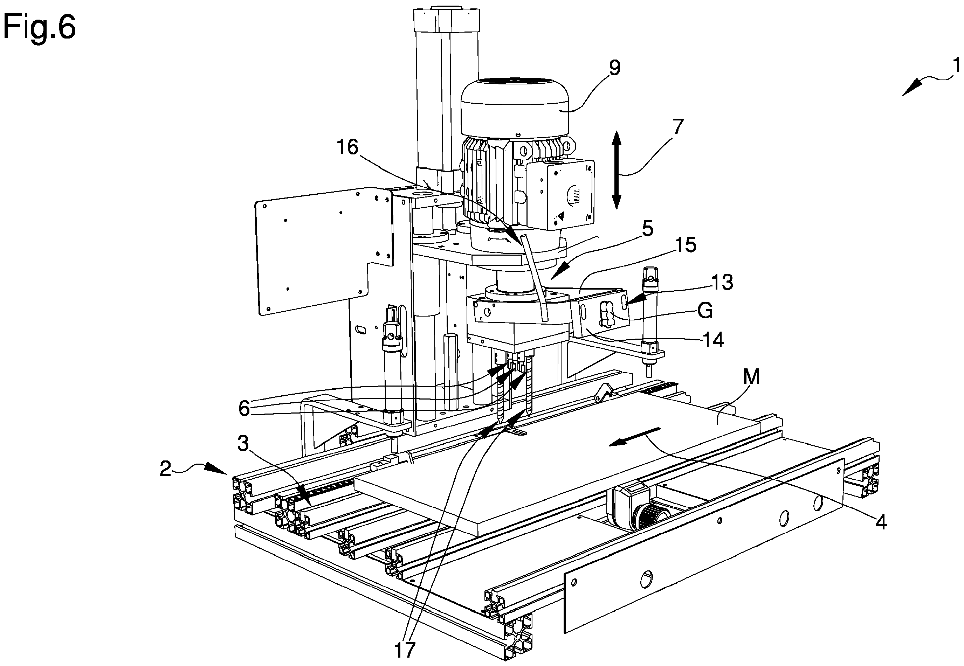

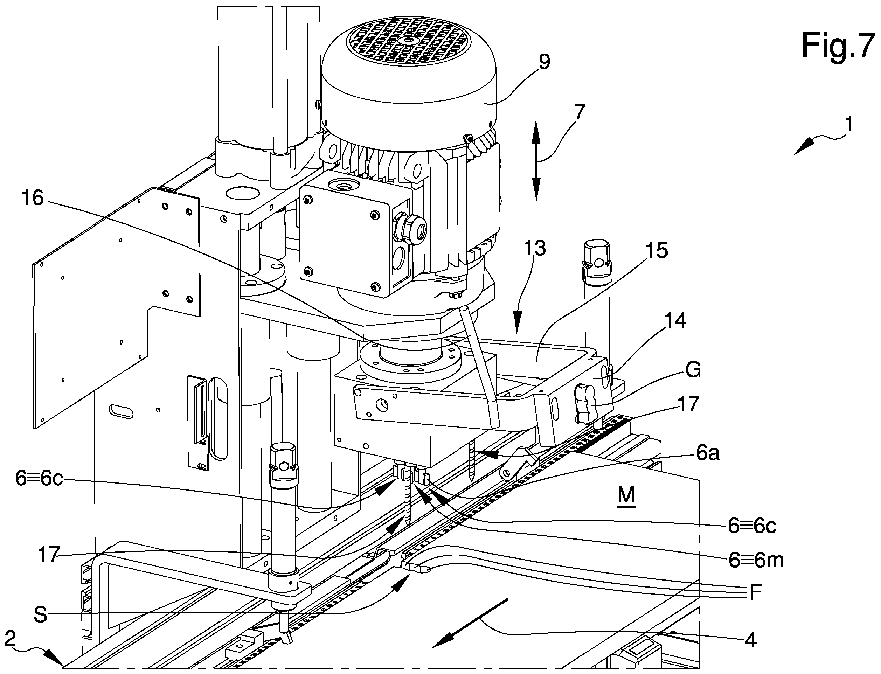

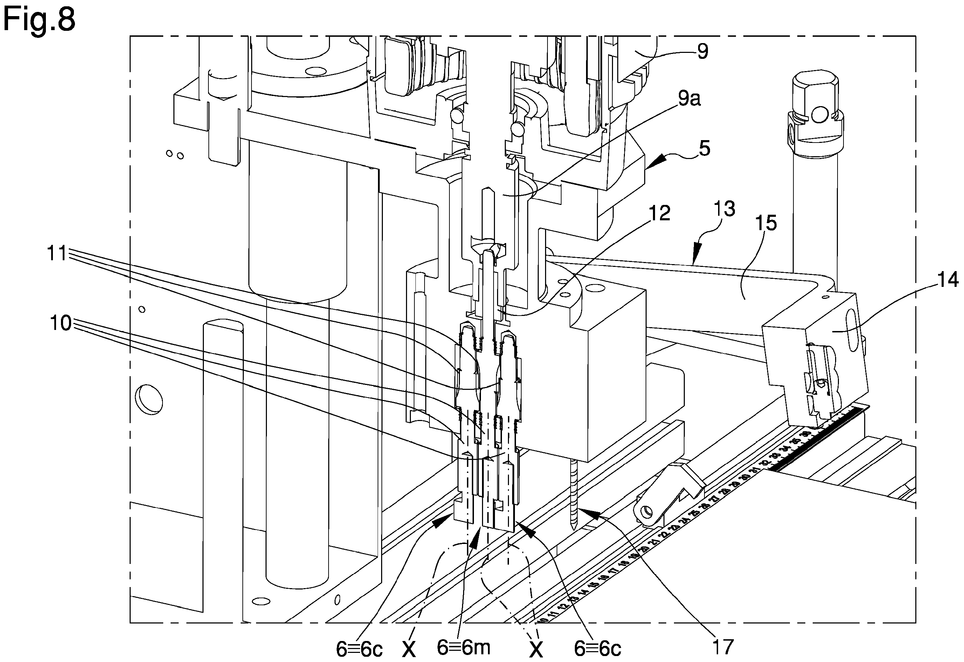

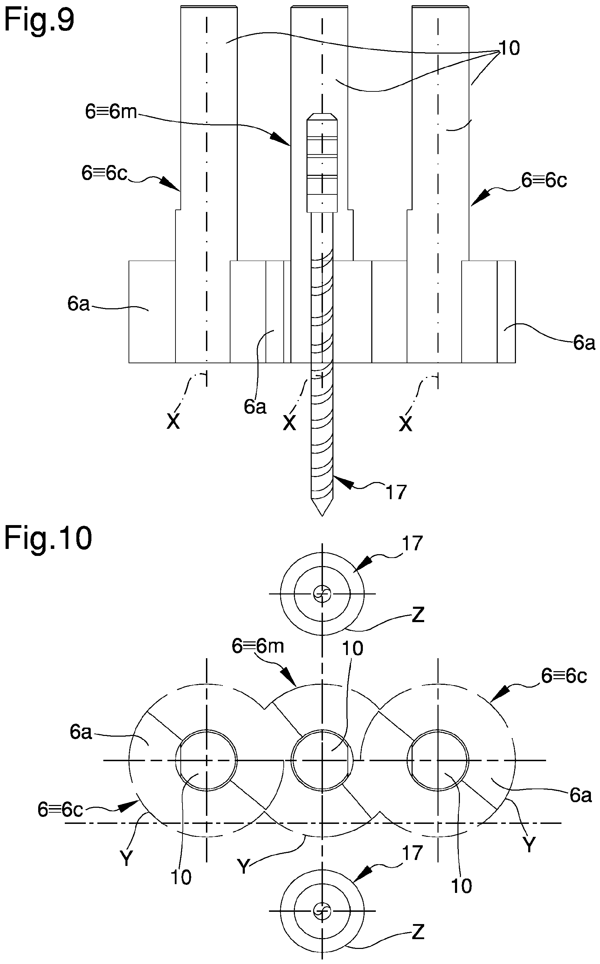

In the embodiment shown in Figures 6 to 10, the work assembly 5 also comprises at least one auxiliary tool 17, the work trajectory Z of which does not interfere with that of the main tools 6, for the making of an auxiliary hole F' on a second manufactured article M" to be coupled to the first manufactured article M'. In particular, the auxiliary hole F' is adapted to receive the connection element Gb of the joining element G.

More particularly, the first and the second manufactured article M' and M" have a substantially sheet-shaped conformation, and the holes F and F' are made on respective faces of these manufactured articles M' and M" intended, in use, to be positioned substantially perpendicular the one to the other. Preferably, the auxiliary tool 17 is misaligned with respect to the direction of work 8.

Appropriately, the cutting tooth 17a of the auxiliary tool 17 is arranged at a different height from the cutting teeth 6a of the main tools 6. More in detail, the auxiliary tool 17 is longer than the main tools 6, so it must be removed from the work assembly 5 during the processing of the first manufactured article M'. Advantageously, the auxiliary tool 17 is kinematically connected to the main tools 6, from which it takes the relevant motion.

In the embodiment shown in Figures 6 to 10, the work assembly 5 comprises two auxiliary tools 17 arranged on opposite sides with respect to the main tools 6. More in detail, the auxiliary tools 17 are arranged symmetrically with respect to a median plane passing through the axis X of the driving tool 6m and transverse to the direction of work 8.

The operation of the present invention is as follows.

The first manufactured article M' to be processed is initially placed on the holding plane 3 so as to arrange it below the work assembly 5.

Once this position has been reached, the work assembly 5 is activated.

More particularly, the main tools 6 are operated in rotation around the related axes X and the work assembly 5 is moved close to the holding plane 3 so as to bring the cutting teeth 6a in contact with the first manufactured article M'.

In this way, the main tools 6 make three main holes F, communicating with each other and having the same depth, so as to obtain the conformation of the recess S shown in Figure 2. More in detail, the first of the main holes F made by the main tools 6 intercepts the edge B of the first manufactured article M' so that the recess S thus obtained faces the edge itself thus defining an open profile.

In the embodiment shown in Figures 6 to 10, to make the recess S, the auxiliary tools 17 must be removed from the work assembly 5, in order to prevent these from interfering, as they are longer than the main tools 6, with the first manufactured article M'.

Subsequently, the joining element G is applied inside the recess S.

As described above, the joining element G comprises a body Ga having substantially the same conformation as the recess S and inside which is housed a connection element Gb which can be moved to fit inside a related auxiliary hole F' made on a second manufactured article M" to be coupled with the first manufactured article M'.

More particularly, the operator, after having applied the joining element G onto the related seat defined on the supporting element 14, seizes the gripping element 16 and rotates the supporting element itself until it reaches the work position.

The joining element G is thus press-fitted inside the recess S.

Once the joining element G has been applied, the operator removes the first manufactured article M' from the holding plane 3 and places a second manufactured article M" on the same. The operator can then apply the auxiliary tool 17 on the work assembly 5 to make the auxiliary hole F' on the second manufactured article M" thus positioned, intended to receive the connection element Gb. During the making of the auxiliary hole F', the main tools 6 do not intercept the second manufactured article M".

The first manufactured article M' and the second manufactured article M" can now be coupled together by placing them in contact with each other and moving the connection element Gb so as to insert it inside the auxiliary hole F'.

It has in practice been ascertained that the described invention achieves the intended objects and, in particular, the fact is underlined that it allows easily making a plurality of holes that communicate with each other, in a precise and repetitive way, without the aid of numerical control machines.

In particular, the use of a plurality of tools, equal in number to the number of holes to be made and close to each other, allows the desired recess to be made extremely quickly and with a single process.

In addition, the presence of the application means on the work assembly itself, allows easily applying also the joining element, so as to obtain the complete product in just two movements.

## Claims

1. Equipment (1) for wood processing, comprising:
- a load-bearing frame (2);
- a holding plane (3) of at least a first wooden manufactured article (M') to be processed associated with said load-bearing frame (2);
- a work assembly (5) associated with said load-bearing frame (2), arranged on top of said holding plane (3) and moveable in the approaching/spacing away direction (7) with respect to the holding plane itself, where said work assembly (5) is provided with at least one main tool (6) for drilling the wood which is operable in rotation around a related axis (X) and defining a related work trajectory (Y);
**characterized by** the fact that said work assembly (5) comprises a plurality of said main tools (6) for drilling the wood substantially arranged at the same height the one to the other with respect to said holding plane (3) and the work trajectories (Y) of which intersect each other so that the corresponding holes (F) defined on the first manufactured article (M') to be processed are at the same level and communicating with each other to define a single recess (S).

2. Equipment (1) according to claim 1, **characterized by** the fact that the axes (X) of said main tools (6) are arranged substantially in line with each other along a direction of work (8).

3. Equipment (1) according to claim 1 or 2, **characterized by** the fact that said work assembly (5) comprises at least three of said main tools (6), where the work trajectory (Y) of each of said main tools (6) intersects the work trajectory (Y) of the adjacent main tools (6).

4. Equipment (1) according to one or more of the preceding claims, **characterized by** the fact that said work assembly (5) comprises motor means (9) and by the fact that said main tools (6) comprise at least one driving tool (6m) kinematically connected to said motor means (9) and at least one driven tool (6c) kinematically connected to said driving tool (6m).

5. Equipment (1) according to claims 4 and 5, **characterized by** the fact that said main tools (6) comprise a central tool, which corresponds to said driving tool (6m), and two lateral tools, which correspond to said driven tools (6c), said driving tool (6m) rotating in the opposite direction to said driven tools (6c).

6. Equipment (1) according to one or more of the preceding claims, **characterized by** the fact that each of said main tools (6) comprises one or more cutting teeth (6a) and by the fact that the cutting teeth (6a) of each of said tools (6) are angularly offset with respect to the cutting teeth (6a) of the adjacent main tools (6).

7. Equipment (1) according to one or more of the preceding claims, **characterized by** the fact that said work assembly (5) comprises at least one auxiliary tool (17) for the making of an auxiliary hole (F') on a second manufactured article (M"), where the work trajectory (Z) of said auxiliary tool (17) does not interfere with that of said main tools (6).

8. Equipment (1) according to claim 7, **characterized by** the fact that the axis of said auxiliary tool (17) is misaligned with respect to said direction of work (8).

9. Equipment (1) according to claim 7 or 8, **characterized by** the fact that said auxiliary tool (17) is arranged at a different height from said main tools (6).

10. Equipment (1) according to one or more of claims 7 to 9, **characterized by** the fact that said auxiliary tool (17) is kinematically connected to said main tools (6).

11. Equipment (1) according to one or more of the preceding claims, **characterized by** the fact that it comprises application means (13) of at least one joining element (G) inside said recess (S).

12. Equipment (1) according to claim 11, **characterized by** the fact that said application means (13) comprise at least one supporting element (14) of at least one joining element (G), hinged to said work assembly (5) and moveable between at least one rest position, in which it is spaced away from said holding plane (3), and at least one work position, in which it is approached to said holding plane (3) so as to insert the joining element (G) inside said recess (S).

13. Method for wood processing, **characterized by** the fact that it comprises the following steps of:
- supplying at least a first manufactured article (M') to be processed;
- supplying at least a joining element (G) comprising at least one body (Ga) and at least one connection element (Gb) inserted moveable inside said body (Ga);
- supplying a piece of equipment according to one or more of claims 1 to 12;
- positioning said first manufactured article (M') onto said holding plane (3);
- first drilling of said first manufactured article (M') by means of said main tools (6) to define a plurality of main holes (F) communicating with each other to make a single recess (S) that faces a perimeter edge of said first manufactured article (M'), said joining element (G) having a conformation substantially similar to said recess (S) so obtained;
- inserting said joining element (G) inside said recess (S).

14. Method according to claim 13, **characterized by** the fact that it comprises the following steps of:
- removing said first manufactured article (M') from said holding plane after said drilling;
- positioning a second manufactured article (M") on said holding plane (3);
- second drilling of said second manufactured article (M") by means of said auxiliary tool (17) to define an auxiliary hole (F') intended to receive said connection element (Gb).
